# EUROPEAN PATENT SPECIFICATION

(11) **EP 4 295 115 B1**
(45) Date of publication and mention of the grant of the patent: **28.05.2025**
(21) Application number: 21844313.3
(22) Date of filing: 22.12.2021
(51) Int. Cl.: G01C 21/20, G06V 20/56, G06V 10/82, G01C 21/00

(54) **SYSTEM AND METHOD FOR TRAINING NEURAL NETWORK FOR GEOGRAPHICAL INFORMATION**
SYSTEM UND VERFAHREN ZUM TRAINIEREN EINES NEURONALEN NETZWERKS FÜR GEOGRAFISCHE INFORMATIONEN
SYSTÈME ET PROCÉDÉ D'APPRENTISSAGE D'INFORMATIONS GÉOGRAPHIQUES PAR UN RÉSEAU NEURONAL

(30) Priority: 17.02.2021 GB 202102197
(43) Date of publication of application: 27.12.2023
(73) Proprietor: Continental Automotive Technologies GmbH, 30175 Hannover (DE)
(72) Inventor: HOY, Michael Colin, Singapore Pte. Ltd. Intellectual Property - 80, Boon Keng Road Singapore 339780 (SG)
(74) Representative: Continental Corporation
(86) International application number: PCT/EP2021/087360
(87) International publication number: WO 2022/174964

(56) References cited:
- US-A1- 2018 275 658

## Description

### TECHNICAL FIELD

The present invention relates to a system and a method for training a neural network for geographical information, and particularly relates to a system and a method for updating geographical information using the neural network.

### BACKGROUND

The following discussion of the background is intended to facilitate an understanding of the present invention only. It may be appreciated that the discussion is not an acknowledgement or admission that any of the material referred to was published, known or part of the common general knowledge of the person skilled in the art in any jurisdiction as at the priority date of the present invention.

Conventionally, technologies for maintenance on geographical information such as a map have been focused on autonomous vehicles which may require lane level maps. The lane level maps generally comprise a list of line segments which may define location of scene elements like lane markers, kerbs, and drivable routes through intersections.

For indoor robotics, most work has been focused on occupancy grid maps. These may generally be easy to build and maintain given that a laser scanner is available on the robot. The grid basically represents which cells contain obstacles. However, small mobile robots may require high resolution semantic grid maps which have many more degrees of freedom and are harder to maintain incrementally.

Cells may contain a wide range of categories relevant for navigation, such as footpath, road, kerb, grass, traffic light crossing etc. Errors tend to cause more problems in the navigation of the robot compared to occupancy grid maps (for example, when used indoors).

Generally, in robotics applications, the semantic grid maps are generally built using the following process:
- Localization algorithms are run to determine the pose of the robot in each part of the map.
- Simple sensor fusion with data from the robot is performed, providing the initial estimate of the grid map.
- This initial estimate is manually edited or updated by a mapping expert.

Therefore, for maintenance on the semantic grid maps, manual operations to automatically generated maps may be required to correct or update flaws in the map due to issues like sensor errors, misalignment, or fundamental ambiguities.

Document US 2018/275658 A1 discloses an autonomous control system configured to generate synthetic data that reflect simulated environments, and to use the generated synthetic data to train computer models for various detection and control algorithms.

As such, there exists a need to develop technologies which specifically train a neural network to learn how to build large scale consistent maps or update the semantic grid maps over time, in order to reduce the reliance on the mapping expert to constantly correct updated maps.

### SUMMARY

The present invention seeks to provide a system and a method that addresses the aforementioned need at least in part.

The technical solution is provided in the form of a system as defined in claim 1, and a method as defined in claim 8.

In some embodiments, each training step may span multiple iterations, and the output of the neural network at earlier iterations may become the second data in subsequent iterations.

Since the neural network can construct the predicted geographical information and compare the actual geographical information and the predicted geographical information, the present invention can train the neural network to learn how to build large scale consistent maps or update the semantic grid maps over time, without manual operations. Accordingly, the present invention is able to reduce costs and efforts required to maintain the semantic grid maps.

In accordance with an aspect of the present invention, there is a system for training a neural network for geographical information comprising: the neural network; and a processor operable to generate an environment from actual geographical information, and to simulate a robot moving in the environment to obtain first data from the simulation of the robot, characterised in that: the processor is operable to produce corrupted geographical information from the actual geographical information to obtain second data from the corrupted geographical information, and the neural network is operable to receive the first and the second data, construct predicted geographical information based on the first and second data, and compare the actual geographical information and the predicted geographical information to train the neural network.

In some embodiments, the generated environment includes a 3D (three-dimensional) environment.

In some embodiments, the processor is operable to generate the 3D environment from a top-down view of the actual geographical information.

In some embodiments, the processor is operable to delete at least a part of the actual geographical information, add a spatial distortion on the actual geographical information, or add incorrect categories or noise on the actual geographical information, to produce the corrupted geographical information.

According to the invention, the neural network is operable to predict at least one region in the actual geographical information that needs to be updated.

According to the invention, the neural network is operable to construct the predicted geographical information based on information relevant to the at least one region that needs to be updated.

In some embodiments, the neural network is operable to correct or update at least one flaw in the actual geographical information by the training.

In some embodiments, the first data includes simulated sensory data from the robot's point of view.

In some embodiments, the actual geographical information includes an actual map, the corrupted geographical information includes a corrupted map, and the predicted geographical information includes a predicted map.

In some embodiments, each training may span multiple iterations. The output of the neural network at earlier iterations may become the second data in subsequent iterations.

In accordance with another aspect of the present invention, there is a method of training a neural network for geographical information comprising steps of: generating an environment from actual geographical information; simulating a robot moving in the environment to obtain first data from the simulation of the robot; producing corrupted geographical information from the actual geographical information to obtain second data from the corrupted geographical information; receiving, by the neural network, the first and the second data; constructing predicted geographical information based on the first and second data; and comparing the actual geographical information and the predicted geographical information to train the neural network.

In some embodiments, the step of generating an environment from actual geographical information comprising a step of: generating a 3D environment from a top-down view of the actual geographical information.

According to the invention, the step of constructing predicted geographical information based on the first and second data comprising a step of: predicting at least one region in the actual geographical information that needs to be updated.

According to the invention, the step of constructing predicted geographical information based on the first and second data comprising a step of: constructing the predicted geographical information based on information relevant to the at least one region that needs to be updated.

In some embodiments, the method further comprises a step of: correcting or updating at least one flaw in the actual geographical information by the training.

Other aspects of the invention will become apparent to those of ordinary skilled in the art upon review of the following description of specific embodiments of the present invention in conjunction with the accompanying drawings.

### BRIEF DESCRIPTION OF DRAWINGS

The present invention will now be described, by way of example only, with reference to the accompanying drawings, in which:
Fig. 1 is a block diagram in accordance with an embodiment of the present invention.
Fig. 2 is a conceptual diagram showing phase 1 in accordance with an embodiment of the present invention.
Fig. 3 is a conceptual diagram showing a conventional system architecture for neural network based on grid mapping.
Fig. 4 is a conceptual diagram showing a system architecture in which a global map is added, in accordance with an embodiment of the present invention.
Fig. 5 is a flowchart in accordance with an embodiment of the present invention.

Other arrangements of the present invention are possible and, consequently, the accompanying drawings are not to be understood as superseding the generality of the preceding description of the invention.

### DETAILED DESCRIPTION OF EMBODIMENT

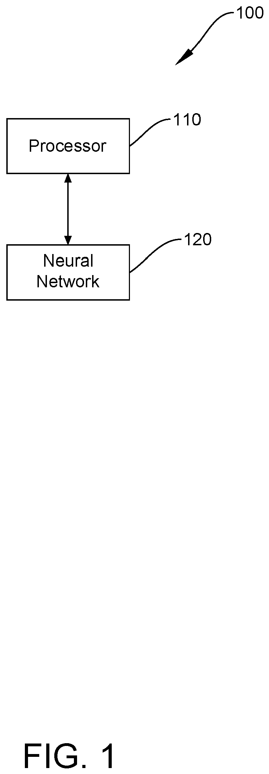

Fig. 1 is a block diagram in accordance with an embodiment of the present invention.

As shown in Fig. 1, a system 100 comprises a processor 110 and a neural network 120.

In some embodiments, the processor 110 may be a controller or a control unit of a device. In some other embodiments, the processor 110 may be a stand-alone device such as a computing device. The computing device may include, but not be limited to, a smartphone, a tablet computer, a laptop computer, a desktop computer and a wearable device. The wearable device may include, but not be limited to, a smart watch, a smart glasses or a mobile virtual reality headset. Although not shown, in some other embodiments, the processor 110 may be a part of or an element of the neural network 120.

In some embodiments, it may be appreciated that the processor 110 may include a plurality of controllers or a plurality of computing devices. In some embodiments, the plurality of computing devices 110 may communicate with each other.

The neural network 120 may be a computer system modelled on a human brain and/or a nervous system. The processor 110 and the neural network 120 are operable to communicate with each other.

The processor 110 may generate an environment from actual geographical information, for example an actual map. The actual map is also referred to as a global (i.e. of an arbitrarily large area) semantic (i.e. with classification of different obstacle/ground surface types) map. In some embodiments, the "actual map" is referred to as either a template map (which is manually specified via a step of "manually specifying a template semantic map - to be described below) or an actual map for real environments (which is not obtainable - the user can only make predictions for this via the output of the neural network when executed on real data).

The generated environment includes a 3D (three-dimensional) environment. In some embodiments, the processor 110 may generate the 3D environment from a top-down view of the actual geographical information, for example the actual map.

The processor 110 may simulate a robot moving in the environment, to obtain data (hereinafter referred to as "first data") from the simulation of the robot. In some embodiments, the first data includes simulated sensory data from the robot's point of view.

Specifically, by simulating the robot, the processor 110 may generate sensory data for which a user knows exact parameters of the underlying actual map that was used to construct the simulation. By generating and utilising such sensory data, the present invention can train the neural network 120 which can solve an inverse problem (i.e. instead of a problem of transforming the semantic grid to the sensory data, performs a relatively harder problem of transforming the sensory data to the semantic grid).

As described above, the first data may be obtained from the simulation of the robot. In some embodiments, the processor 110 may obtain the first data and provide the neural network 120 with the first data, and thus the neural network 120 may receive the first data from the processor 110. In some other embodiments, the neural network 120 may obtain the first data directly.

The processor 110 may produce corrupted geographical information, for example a corrupted map, from the actual geographical information, for example the actual map, to obtain data (hereinafter referred to as "second data") from the corrupted geographical information.

In some embodiments, the processor 110 may delete at least a part of the actual geographical information, for example the actual map, in order to produce the corrupted geographical information, for example the corrupted map. In some other embodiments, the processor 110 may add a spatial distortion on the actual geographical information, for example the actual map, in order to produce the corrupted geographical information, for example the corrupted map. In some other embodiments, the processor 110 may add incorrect categories or noise on the actual geographical information, for example the actual map, in order to produce the corrupted geographical information, for example the corrupted map.

Specifically, the second data may be obtained from the corrupted geographical information, for example the corrupted map. In some embodiments, the processor 110 may obtain the second data and provide the neural network 120 with the second data, and thus the neural network 120 may receive the second data from the processor 110. In some other embodiments, the neural network 120 may obtain the second data directly.

The neural network 120 may construct predicted geographical information, for example a predicted map, based on the first data and second data.

In some embodiments, the neural network 120 may predict at least one region in the actual geographical information, for example the actual map, that needs to be updated. The neural network 120 may then construct the predicted geographical information, for example the predicted map, based on information relevant to the at least one region that needs to be updated.

The neural network 120 may then compare the actual geographical information, for example the actual map, and the predicted geographical information, for example the predicted map, so as to train the neural network 120. In some embodiments, the neural network 120 may correct or update at least one flaw in the actual geographical information, for example the actual map, by the training of the neural network 120.

In some embodiments, the actual geographical information, for example the actual map, is a mutable buffer that may get incrementally updated over time. For example, if a vehicle trajectory covers the same area twice, the neural network 120 may update the buffer twice. It may be appreciated that the mutable buffer is not necessarily needed during the training of the neural network 120.

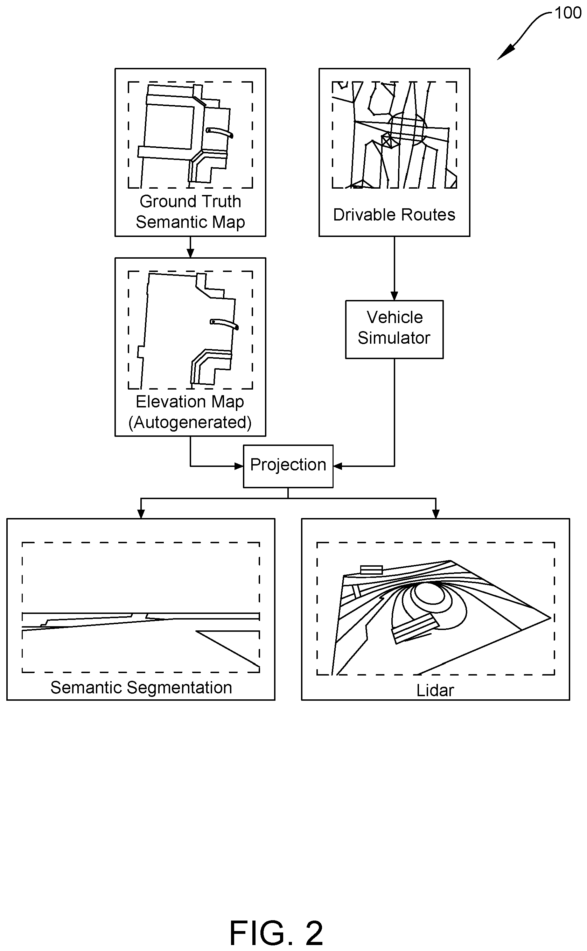

The present invention may comprise the three (3) phases as follows. Fig. 2 is a conceptual diagram showing phase 1 in accordance with an embodiment of the present invention.

### Phase 1: Collecting synthetic training data

1) Manually specifying a "template" semantic map
   a) The semantic map may be created with, for example off the shelf vector graphics software, using colours for different semantic categories.
   b) This operation may include using a graph editing software to specify possible routes the robot could take through the map.
2) Using a rule-based system to generate an elevation map which is consistent with the semantic map
   a) The elevation map contains different data compared to the semantic map. In the semantic map, each cell indexes a list of possible terrain types. In the elevation map, each cell represents the vertical displacement of the cell (relative to a reference).
   b) Some other possibilities are to use a multi-level elevation map (which contains additional layers for overhanging objects) or to use some other 3D representation (e.g. a triangle mesh representation).
3) Simulating the robot moving through the map, and collecting the first data (for example, simulated sensory data from the robot's point of view)
   a) The first data may include, but not be limited to, semantic segmentation and lidar data.
   b) Another possible variation of the embodiment involves applying a domain translation neural network which perturbs the simulated data to make it appear more like real data.

### Phase 2: Training the neural network 120 to incrementally repair the actual map given sensory data

1) Corrupting the actual map with a range of simulated issues
   a) For example, deleting at least a part of the actual map
   b) As another example, adding a spatial distortion on the actual map
   c) As another example, adding incorrect categories or noise on the actual map
2) Constructing the neural network 120 to act as a grid mapper
   a) Inputs include the first data (for example, the sensory data such as semantic segmentation and lidar) and the second data (for example, the corrupted map cropped around the robot's current position).
   b) Output includes a map of corrections to apply to the actual map in the area proximate the robot.
3) Training the neural network 120
   a) The objective for the optimisation is to maximize the accuracy of the estimated actual map (relative to the known synthetic ground truth).
   b) This phase may also be applied iteratively over multiple frames of data using a recurrent neural network structure.

### Phase 3: Deployment with real data/maps

1) Starting with either a completely blank map (i.e. 100% map corruption) or an initial estimate of the map, for a given environment
2) Obtaining the sensory data and localization information from a real robot navigating the environment
3) Performing pre-processing on the sensory data
   a) For example, using a semantic segmentation neural network on the camera data
   b) In some embodiments, some plane fitting or outlier removal on the lidar data
4) Passing these inputs to the neural network 120, and obtaining the incremental updates which need be applied to the map

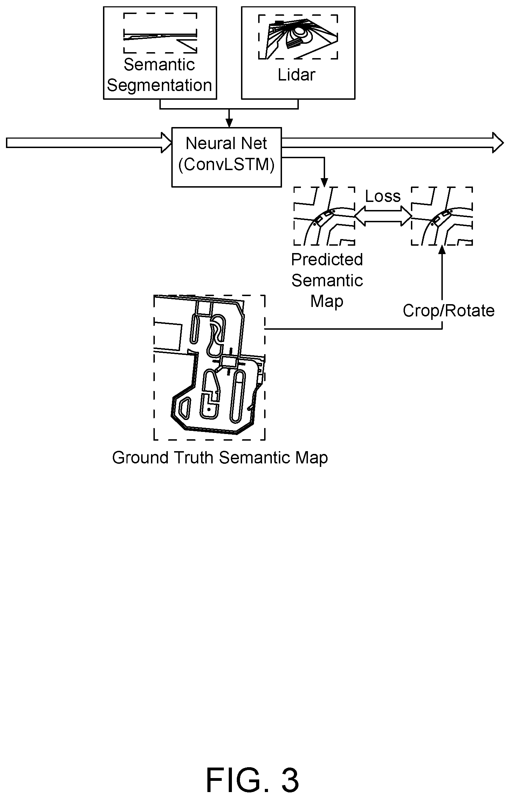

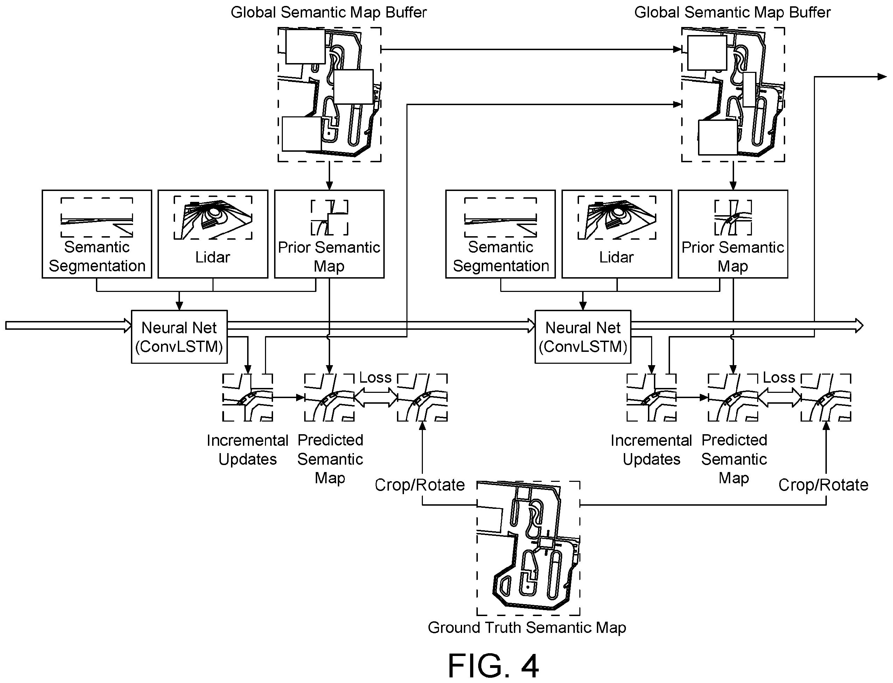

Fig. 3 is a conceptual diagram showing a conventional system architecture for neural network 120 based on grid mapping (also referred to as "local mapper"). Fig. 4 is a conceptual diagram showing a system architecture in which a global map is added, in accordance with an embodiment of the present invention (also referred to as "local/global data fusion mapper").

Figs. 3 and 4 elucidate the difference between the commonly used system architecture for the neural network 120 based on the grid mapping (shown in Fig. 3), and the system architecture in accordance with an embodiment of the present invention (shown in Fig. 4).

As shown in Fig. 4, the method in accordance with an embodiment of the present invention may make use of a global semantic map buffer, which allows the neural network 120 to perform information fusion between the sensor data and the prior map. In addition, the method in accordance with an embodiment of the present invention may make use of a novel training mechanism which specifies a method of training based on an artificially corrupted global map, and a method to unwrap the training process over multiple iterations of the map update mechanism. As such, the neural network 120 can better learn to perform incremental updates to the map.

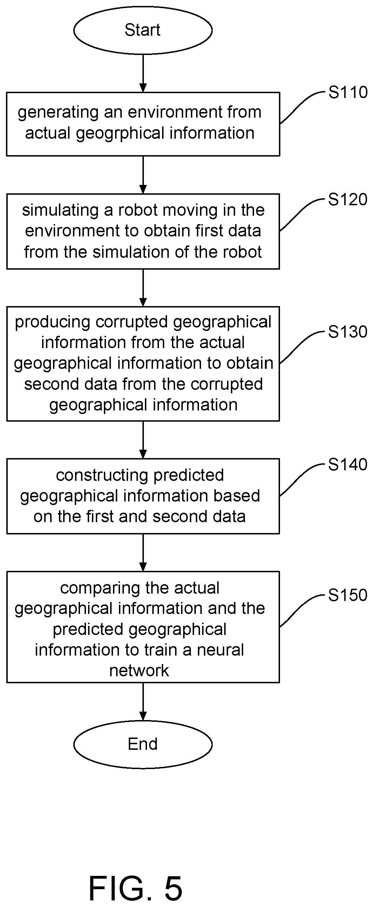

Fig. 5 is a flowchart in accordance with an embodiment of the present invention.

First, the processor 110 may generate the environment, for example the 3D environment, from the actual geographical information (S110). The processor 110 may generate the 3D environment from the top-down view of the actual geographical information.

The processor 110 may then simulate the robot moving in the environment, for example the 3D environment (S120). Thus, the processor 110 may generate the first data, for example the sensory data from the robot's point of view. The neural network 120 may receive the first data.

The processor 110 may produce corrupted geographical information from the actual geographical information (S130). Thus, the processor 110 may generate the second data from the corrupted geographical information. The neural network 120 may receive the second data.

The neural network 120 which has received the first data and the second data may construct the predicted geographical information based on the first data and the second data (S140). The neural network 120 may predict at least one region in the actual geographical information that needs to be updated, and then construct the predicted geographical information based on information relevant to the at least one region that needs to be updated.

The neural network 120 may then compare the actual geographical information and the predicted geographical information so as to train the neural network 120 (S150). The neural network 120 may correct or update at least one flaw in the actual geographical information, by the training.

In accordance with the present invention, by training the neural network 120 for the exact task of determining corrective updates to apply to the actual grid map, minor flaws that may otherwise be introduced by traditional sensor fusion methods can be automatically mitigated.

It may be appreciated that the present invention can also be used for creation of detailed maps for purposes other than robot navigation (for example, constructing and/or maintaining precise maps of construction sites, agricultural fields, search and rescue sites, etc.).

While the present invention has been particularly shown and described with reference to exemplary embodiments thereof, it will be understood by those skilled in the art that various changes in form and details may be made therein without departing from the scope of the present invention as defined by the appended claims. However this is merely an exemplarily embodiment, and those skilled in the art will recognize that various modifications and equivalents are possible in light of the above embodiments.

### LIST OF REFERENCE SIGNS

| | | | |
|---|---|---|---|
| 100: | System | 110: | Processor |
| 120: | Neural Network | | |

## Claims

1. A system for training a neural network (120) for geographical information the neural network (120); and a processor (110) operable to generate an environment from actual geographical information, and to simulate a robot moving in the environment to obtain first data from the simulation of the robot, **characterised in that**:
the processor is operable to produce corrupted geographical information from the actual geographical information to obtain second data from the corrupted geographical information, and
the neural network is operable to receive the first and the second data, construct predicted geographical information based on the first and second data, and compare the actual geographical information and the predicted geographical information to train the neural network, wherein the neural network is operable to predict at least one region in the actual geographical information that needs to be updated and to construct the predicted geographical information based on information relevant to the at least one region that needs to be updated.

2. The system according to claim 1, wherein the generated environment includes a 3D (three-dimensional) environment.

3. The system according to claim 2, wherein the processor is operable to generate the 3D environment from a top-down view of the actual geographical information.

4. The system according to any of claims 1 to 3, wherein the processor is operable to delete at least a part of the actual geographical information, add a spatial distortion on the actual geographical information, or add incorrect categories or noise on the actual geographical information, to produce the corrupted geographical information.

5. The system according to any of claims 1 to 4, wherein the neural network is operable to correct or update at least one flaw in the actual geographical information by the training.

6. The system according to any of claims 1 to 5, wherein the first data includes simulated sensory data from the robot's point of view.

7. The system according to any of claims 1 to 6, wherein the actual geographical information includes an actual map, the corrupted geographical information includes a corrupted map, and the predicted geographical information includes a predicted map.

8. A method of training a neural network for geographical information comprising steps of:
generating (S110) an environment from actual geographical information
simulating (S120) a robot moving in the environment to obtain first data from the simulation of the robot;
producing (S130) corrupted geographical information from the actual geographical information to obtain second data from the corrupted geographical information;
receiving, by the neural network, the first and the second data;
constructing (S140) predicted geographical information based on the first and second data; and
comparing (S150) the actual geographical information and the predicted geographical information to train the neural network,
wherein the step of constructing predicted geographical information based on the first and second data comprises:
predicting at least one region in the actual geographical information that needs to be updated; and
constructing the predicted geographical information based on information relevant to the at least one region that needs to be updated.

9. The method according to claim 8, wherein the step of generating an environment from actual geographical information comprising a step of: generating a 3D environment from a top-down view of the actual geographical information.

10. The method according to any of claims 8 to 9 further comprising a step of: correcting or updating at least one flaw in the actual geographical information by the training.

## Patentansprüche

1. System zum Trainieren eines neuronalen Netzwerks (120) für geografische Informationen, das Folgendes umfasst:
das neuronale Netzwerk (120); und einen Prozessor (110), der betreibbar ist, um eine Umgebung aus tatsächlichen geografischen Informationen zu erzeugen und einen Roboter zu simulieren, der sich in der Umgebung bewegt, um erste Daten aus der Simulation des Roboters zu erhalten, **dadurch gekennzeichnet, dass**:
der Prozessor betreibbar ist, um beschädigte geografische Informationen aus den tatsächlichen geografischen Informationen zu erzeugen, um zweite Daten aus den beschädigten geografischen Informationen zu erhalten, und
das neuronale Netzwerk betreibbar ist, um die ersten und die zweiten Daten zu empfangen, vorhergesagte geografische Informationen basierend auf den ersten und zweiten Daten zu konstruieren, und die tatsächlichen geografischen Informationen und die vorhergesagten geografischen Informationen zu vergleichen, um das neuronale Netzwerk zu trainieren, wobei das neuronale Netzwerk betreibbar ist, um mindestens eine Region, die aktualisiert werden muss, in den tatsächlichen geografischen Informationen vorherzusagen, und um die vorhergesagten geografischen Informationen basierend auf Informationen zu konstruieren, die für die mindestens eine Region, die aktualisiert werden muss, relevant sind.

2. System nach Anspruch 1, wobei die erzeugte Umgebung eine 3D-(dreidimensionale)-Umgebung einschließt.

3. System nach Anspruch 2, wobei der Prozessor betreibbar ist, um die 3D-Umgebung aus einer Draufsicht der tatsächlichen geografischen Informationen zu erzeugen.

4. System nach einem der Ansprüche 1 bis 3, wobei der Prozessor betreibbar ist, um mindestens einen Teil der tatsächlichen geografischen Informationen zu löschen, eine räumliche Verzerrung der tatsächlichen geografischen Informationen hinzuzufügen oder falsche Kategorien oder Rauschen der tatsächlichen geografischen Informationen hinzuzufügen, um die beschädigten geografischen Informationen zu erzeugen.

5. System nach einem der Ansprüche 1 bis 4, wobei das neuronale Netzwerk betreibbar ist, um mindestens einen Fehler in den tatsächlichen geografischen Informationen durch das Training zu korrigieren oder zu aktualisieren.

6. System nach einem der Ansprüche 1 bis 5, wobei die ersten Daten simulierte sensorische Daten aus der Sicht des Roboters beinhalten.

7. System nach einem der Ansprüche 1 bis 6, wobei die tatsächlichen geografischen Informationen eine tatsächliche Karte beinhalten, die beschädigten geografischen Informationen eine beschädigte Karte beinhalten und die vorhergesagten geografischen Informationen eine vorhergesagte Karte beinhalten.

8. Verfahren zum Trainieren eines neuronalen Netzwerks für geografische Informationen, das die folgenden Schritte umfasst:
Erzeugen (S110) einer Umgebung aus tatsächlichen geografischen Informationen;
Simulieren (S120) eines Roboters, der sich in der Umgebung bewegt, um erste Daten aus der Simulation des Roboters zu erhalten;
Erstellen (S130) von beschädigten geografischen Informationen aus den tatsächlichen geografischen Informationen, um zweite Daten aus den beschädigten geografischen Informationen zu erhalten;
Empfangen, durch das neuronale Netzwerk, der ersten und der zweiten Daten;
Konstruieren (S140) vorhergesagter geografischer Informationen basierend auf den ersten und zweiten Daten; und
Vergleichen (S150) der tatsächlichen geografischen Informationen und der vorhergesagten geografischen Informationen, um das neuronale Netzwerk zu trainieren,
wobei der Schritt des Konstruierens vorhergesagter geografischer Informationen basierend auf den ersten und zweiten Daten Folgendes umfasst:
Vorhersagen mindestens einer Region in den tatsächlichen geografischen Informationen, die aktualisiert werden muss; und
Erstellen der vorhergesagten geografischen Informationen basierend auf Informationen, die für die mindestens eine Region relevant sind, die aktualisiert werden muss.

9. Verfahren nach Anspruch 8, wobei der Schritt des Erzeugens einer Umgebung aus tatsächlichen geografischen Informationen den folgenden Schritt umfasst: Erzeugen einer 3D-Umgebung aus einer Draufsicht der tatsächlichen geografischen Informationen.

10. Verfahren nach einem der Ansprüche 8 bis 9, das ferner den folgenden Schritt umfasst: Korrigieren oder Aktualisieren mindestens eines Fehlers in den tatsächlichen geografischen Informationen durch das Training.

## Revendications

1. Système d'apprentissage d'informations géographiques par un réseau neuronal (120), comprenant :
le réseau neuronal (120) et un processeur (110) pouvant fonctionner pour générer un environnement à partir d'informations géographiques réelles, et pour simuler un robot se déplaçant dans l'environnement pour obtenir des premières données à partir de la simulation du robot, **caractérisé en ce que** :
le processeur peut fonctionner pour produire des informations géographiques corrompues à partir des informations géographiques réelles pour obtenir des secondes données à partir des informations géographiques corrompues, et
le réseau neuronal peut fonctionner pour recevoir les premières et les secondes données, construire des informations géographiques prédites sur la base des première et secondes données, et comparer les informations géographiques réelles et les informations géographiques prédites pour entraîner le réseau neuronal, dans lequel le réseau neuronal peut fonctionner pour prédire au moins une région dans les informations géographiques réelles qui doit être mise à jour et pour construire les informations géographiques prédites sur la base d'informations relatives à la ou aux régions qui doivent être mises à jour.

2. Système selon la revendication 1, dans lequel l'environnement généré comprend un environnement 3D (tridimensionnel).

3. Système selon la revendication 2, dans lequel le processeur peut fonctionner pour générer l'environnement 3D à partir d'une vue descendante des informations géographiques réelles.

4. Système selon l'une quelconque des revendications 1 à 3, dans lequel le processeur peut fonctionner pour supprimer au moins une partie des informations géographiques réelles, ajouter une distorsion spatiale sur les informations géographiques réelles, ou ajouter des catégories incorrectes ou du bruit sur les informations géographiques réelles, pour produire les informations géographiques corrompues.

5. Système selon l'une quelconque des revendications 1 à 4, dans lequel le réseau neuronal peut fonctionner pour corriger ou mettre à jour au moins un défaut dans les informations géographiques réelles au moyen de l'apprentissage.

6. Système selon l'une quelconque des revendications 1 à 5, dans lequel les premières données comprennent des données sensorielles simulées du point de vue du robot.

7. Système selon l'une quelconque des revendications1 à 6, dans lequel les informations géographiques réelles comprennent une carte réelle, les informations géographiques corrompues comprennent une carte corrompue, et les informations géographiques prédites comprennent une carte prédite.

8. Procédé d'apprentissage d'informations géographiques par un réseau neuronal comprenant les étapes suivantes :
la génération (S110) d'un environnement à partir d'informations géographiques réelles ;
la simulation (S120) d'un robot se déplaçant dans l'environnement pour obtenir des premières données à partir de la simulation du robot ;
la production (S130) d'informations géographiques corrompues à partir des informations géographiques réelles pour obtenir des secondes données à partir des informations géographiques corrompues ;
la réception, par le réseau neuronal, des premières et des secondes données ;
la construction (S140) d'informations géographiques prédites sur la base des premières et secondes données ; et
la comparaison (S150) des informations géographiques réelles et des informations géographiques prédites pour entraîner le réseau neuronal,
dans lequel l'étape de construction d'informations géographiques prédites sur la base des premières et secondes données comprend :
la prédiction d'au moins une région dans les informations géographiques réelles qui doit être mise à jour ; et
la construction des informations géographiques prédites sur la base d'informations relatives à la ou aux régions qui doivent être mises à jour.

9. Procédé selon la revendication 8, dans lequel l'étape de génération d'un environnement à partir d'informations géographiques réelles comprend une étape de : génération d'un environnement 3D à partir d'une vue descendante des informations géographiques réelles.

10. Procédé selon l'une quelconque des revendications 8 à 9, comprenant en outre une étape de : correction ou mise à jour d'au moins un défaut dans les informations géographiques réelles au moyen de l'apprentissage.
